# EUROPEAN PATENT SPECIFICATION

(11) **EP 3 606 065 B1**
(45) Date of publication and mention of the grant of the patent: **04.10.2023**
(21) Application number: 18770337.6
(22) Date of filing: 19.03.2018
(51) Int. Cl.: H04N 17/00, G03B 43/00

(54) **MEDIA MODULE FOR TESTING CAMERA MODULE, TESTING PANEL AND TESTING BOARD**
MEDIENMODUL ZUR PRÜFUNG EINES KAMERAMODULS, PRÜFPLATTE UND PRÜFPLATINE
MODULE MULTIMÉDIA DESTINÉ À TESTER UN MODULE DE CAMÉRA, PANNEAU DE TEST ET CARTE DE TEST

(30) Priority: 20.03.2017 CN 201710165820
(43) Date of publication of application: 05.02.2020
(73) Proprietor: Ningbo Sunny Opotech Co., Ltd., Ningbo, Zhejiang 315400 (CN)
(72) Inventor: WANG, Mingzhu, Ningbo Zhejiang 315400 (CN); CHEN, Yongming, Ningbo Zhejiang 315400 (CN); FANG, Ze, Ningbo Zhejiang 315400 (CN); CHEN, Yutian, Ningbo Zhejiang 315400 (CN); GUO, Nan, Ningbo Zhejiang 315400 (CN)
(74) Representative: Gong, Jinping
(86) International application number: PCT/CN2018/079479
(87) International publication number: WO 2018/171556

(56) References cited:
- CN-A- 102 176 757
- CN-A- 102 752 623
- CN-A- 103 475 812
- CN-A- 106 210 713
- CN-U- 203 327 181
- CN-U- 204 013 928
- CN-U- 206 002 840
- KR-B1- 101 199 018
- KR-B1- 101 316 793
- US-A1- 2014 204 219

## Description

### FIELD OF THE INVENTION

The invention relates to a testing jointed board and a test equipment, in particular to a testing jointed board which is composed of medium modules used for batch camera module testing.

### BACKGROUND OF THE INVENTION

With the development of smart devices, more and more smart devices are inseparable from image acquisition function. Moreover, high-performance imaging and photographing functions are being pursued by the market. For example, a smart phone, a laptop computer, and a smart wearable device are all developed toward higher-performance imaging functions. Performance parameters are also constantly updated as the market changes. These miniature imaging applications are inseparable from the use of camera modules.

At present, there are still many unstable factors in the production of the camera module, and the manufactured camera module cannot be directly installed in the device. Then each camera module needs to be tested with different performance parameters, and camera modules that do not meet the requirements cannot be used. For the manufacturer, the yield of the product is important, and the yield of the shipped product is even more critical. Therefore, in the production of camera modules, it is basically to take all products for all tests. This undoubtedly increases production costs and reduces production efficiency.

In the conventional production process of the camera module, each camera module is sequentially tested in various ways. That is, for a large number of products, the test is carried out separately. However, at present, production tends to be mass-produced in production, and the conventional camera module test cannot meet the requirements of mass production. In addition, in the traditional test, the camera module is connected to the test equipment or the test environment, and after the test is completed, the camera module is got back. Moreover, the number of test items required is also large, and repeated fetch and connection and disconnection of the camera module will inevitably have an adverse effect on the camera module. Taking into account the cost of time, the separate connection and disconnection of the camera module in each test will affect efficiency. In particular, traditionally, test of each camera module is manual, requires manual connection and fetch operations, to actively maintain the test environment. This will bring more adverse factors to the test, and it will not be able to adapt to the development trend.

A conventional test relay terminal of the camera module is connected by all the pins of the camera module to trap the camera module in the terminal by using at least two layers of snaps. Moreover, contact pins are relatively concentrated, and circuit of the camera module is switched by a cable, and usually at least two transfers are required to be connected with the test equipment. At the end of each test, the camera module needs to be taken out and then connected to the next test environment. The pin of the conventional relay terminal has higher requirements on accuracy, and the repeated connection and fetch damage to the circuit is serious, and the service life is short. And different types of camera modules need different structures to be fixed, otherwise, the camera module will be detached. In addition, not all the tests of the camera module can be adapted, and the labor cost is high.

How to test various performances of the camera module in batches during the test is currently a problem. Moreover, in the process of testing a plurality of camera modules, how to ensure the validity and accuracy in multiple processes such as connection, test, and fetch is also a problem that must be solved. In addition, in order to adapt to different types of camera modules that are carried out different test methods, the adaptability of the test environment is also considered. Although it is said that compared with manual, mechanical has certain advantages in terms of precision, how to overcome the tolerance formed on mechanical flow in practice is also one of the challenges.

CN204013928U discloses a universal testing device for a mobile phone camera module, comprising an input module and an output module, and further a conversion circuit module for converting the pin definition of testing products into the standard pin definition.

CN106210713A discloses a multi-module simultaneous test device for mobile phone camera modules, which comprises multiple sets of camera board cards that are connected together by a circuit board.

KR101199018B1 and US2014/204219A1 relate to a test socket for camera module, respectively. CN203327181U relates to a multi-camera-module testing tool, which can simultaneously calibrate the plurality of modules at a time.

CN206002840U discloses a twin-lens camera module test device, which is specifically applied to accomplish the basic performance test of each of the lenses of the twin-lens camera module at the same time.

### SUMMARY OF THE INVENTION

The present invention provides a testing jointed board according to claim 1 and a test equipment according to claim 19. Some features of optional or preferred embodiments are recited in the dependent claims.

### BRIEF DESCRIPTION OF THE DRAWINGS

Fig. 1 is a schematic view of a testing jointed board and a medium module in accordance with a preferred embodiment of the present invention.
Fig. 2 is an exploded schematic view of the testing jointed board and the medium module in accordance with the above-described preferred embodiment of the present invention.
Fig. 3 is a schematic view of a supporting board of the testing jointed board in accordance with the above-described preferred embodiment of the present invention.
Fig. 4 is a schematic view of the medium module being disposed on the testing jointed board in accordance with the above-described preferred embodiment of the present invention.
Fig. 5 is a schematic view of the medium module being disposed on the testing jointed board in accordance with the above-described preferred embodiment of the present invention.
Fig. 6 is a cross-sectional view of the medium module disposed on the testing jointed board in accordance with the above-described preferred embodiment of the present invention.
Fig. 7 is a schematic view of a snapping assembly of the testing jointed board in accordance with the above-described preferred embodiment of the present invention.
Fig. 8 is an overall schematic view of the medium module in accordance with the above-described preferred embodiment of the present invention.
Fig. 9 is an overall schematic view of the medium module adapted to be connected to the camera module in accordance with the above-described preferred embodiment of the present invention.
Fig. 10 is an overall schematic view of the medium module adapted to be connected to the camera module in accordance with the above-described preferred embodiment of the present invention.
Fig. 11 is an exploded schematic view of the testing jointed board in accordance with another preferred embodiment of the present invention.
Fig. 12 is an overall schematic view of the medium module and the testing jointed board in accordance with the above-described preferred embodiment of the present invention.
Fig. 13 is an overall schematic view of the medium module and the testing jointed board in accordance with the above-described preferred embodiment of the present invention.
Fig. 14 is an exploded schematic view of the testing jointed board in accordance with the above-described preferred embodiment of the present invention.
Fig. 15 is an overall schematic view of the medium module adapted to be connected to the camera module in accordance with the above-described preferred embodiment of the present invention.
Fig. 16 is a schematic view of an equipment for testing the testing jointed board in accordance with the above-described preferred embodiment of the present invention.

### DETAIL DESCRIPTION OF THE INVENTION

The following description is presented to disclose the invention to enable those skilled in the art to practice the invention. The preferred embodiments in the following description are by way of example only, and other obvious variations will occur to those skilled in the art.

It should be understood by those skilled in the art that in the disclosure of the present invention, the orientation or positional relationship of the indications of the terms "longitudinal", "transverse", "upper", "lower", "front", "back", "left", "right", "upright", "horizontal", "top", "bottom", "inside", "outside", etc. is based on the orientation or positional relationship shown in the drawings, which is merely for convenience of description of the present invention and simplifying the description, and is not intended to indicate or imply that the device or element referred to must have a particular orientation, and be constructed and operated in a particular orientation. Therefore, the above terms are not to be construed as limiting the invention.

It will be understood that the term "a" is understood to mean "at least one" or "one or more", that is, in one embodiment, the number of one element may be one, and in other embodiments, the number of the element can be multiple, and the term "a" cannot be construed as limiting the quantity.

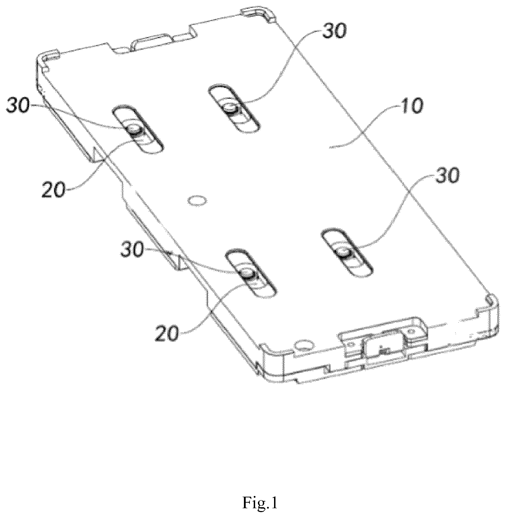

The invention provides a testing jointed board and a test equipment for testing at least one camera module. As shown in Fig. 1, the preferred embodiment provides a testing jointed board comprising: a board body 10 and at least one medium module 20, wherein the medium module 20 is connected to a camera module 30, wherein the camera module 30 is a finished product to be tested, and the camera module 30 is connected to the medium module 20 for performing various performance tests on of camera module 30. The camera module 30 can be connected and detachably fixed to the medium module 20, and the medium module 20 can carry the camera module 30 to perform all testing operations. It is to be noted that the connection between the medium module 20 and the camera module 30 is one by one. That is, the camera module 30 can complete all testing operations through the medium module 20 without having to be repeatedly connected and fetched relative to the medium module 20. For example, the camera module 30 to be tested is connected and fixed to the medium module 20 before starting the testing operation. The medium module 20 will carry the camera module 30 for all the tests. The medium module 20 will be always connected to the camera module 30 regardless of whether the camera module 30 passes the test. That is, the medium module 20 can also assist the camera module 30 in performing the corresponding operation without passing the test for the camera module 30 that has not passed the test. For the camera module 30 that passes the test, the medium module 20 will also accompany the camera module 30 to complete other tests. With the medium module 20, the camera module 30 can avoid repeated connection and disconnection and fetch during all tests, including the flow process, to reduce adverse effects of the test on the camera module 30, reduce the time required for each of the camera modules 30 to be tested, and improve the overall efficiency of the test.

In addition, the medium module 20 can simultaneously provide a stable connection in the structure and circuit for the camera module 30. The medium module 20 provides a circuit expansion of the camera module 30 for testing requirements, and indirectly causes the camera module 30 to be performed various performance tests. Moreover, the camera module 30 can be given a certain protection by the medium module 20, so that the camera module 30 can complete all testing operations by the medium module 20. Of course, the camera module 30 can be detached from the medium module 20 as needed. For example, after a certain test fails or the entire test is completed, the camera module 30 is tested completely to be detached from the medium module 20, thereby causing the camera module 30 to complete the test. It should be noted that the medium module 20 can be adapted to different types of the camera module 30. Moreover, the medium module 20 is less expensive and does not require complicated processes. In this way, the medium module 20 can carry the camera module 30 to be repeatedly tested to reduce the test cost. Moreover, the medium module 20 has a high degree of matching for different test items, and the medium module 20 can participate in different test projects. For the same camera module 30 to be tested, it is not necessary to replace the connected medium modules 20. That is, the medium module 20 can carry different types of the camera module 30 for testing. Therefore, for the testing process of the camera module 30, the camera module 30 and the medium module 20 are mutually corresponding and need not be replaced. For the different types of the camera module 30, the medium module 20 can be adapted, and the medium module 20 can carry different camera modules 30 for testing. For different types of test projects, the medium module 20 has extremely high adaptability to the test equipment, and can ensure that the camera module 30 can effectively complete the testing operation.

In addition, the board body 10 provided by the preferred embodiment is disposed at least two medium modules 20 for testing a plurality of the camera modules 30 during testing. Preferably, the board body 10 may be disposed m×n medium modules 20 which are arranged in an array, wherein m and n are integers greater than or equal to 2. The board body 10 fixes the medium module 20 in an array, and ensures that the environment in which the medium module 20 is located is consistent during the test. That is, the test conditions of all of the medium modules 20 disposed on the testing board are identical. In this way, the test environment of the camera module 30 carried by the medium module 20 can be ensured to be stable. For example, in the preferred embodiment, the testing board body 10 can be disposed four medium modules 20, and each of the medium modules 20 is connected to the camera module 30 correspondingly.

The medium module 20 may be taken out from the board body 10 during testing or may be re-mounted to the board body 10. That is, the medium module 20 is detachable relative to the board body 10 during the overall testing process. The medium module 20 carries the camera module 30 to be removably disposed on the board body 10 according to different requirements. In the testing process, the camera module 30 is not required to be fetched, and the camera module 30 is operated by the medium module 20. The camera module 30 is provided with certain protection. Moreover, the medium module 20 is preferably fabricated from a rigid material suitable for manipulation of the medium module 20 by means of a machine. For example, after performing a certain performance test, the camera module 30 carried by one of the four medium modules 20 fails to pass the test, and the corresponding medium module 20 is taken out, and thus the camera module 30 that has not passed is fetched. Correspondingly, when the camera module 30 that needs to pass the test is disposed on the board body 10, the camera module 30 carried by the medium module 20 is disposed on the board body 10 by disposing the medium module 20 on the board body 10. Of course, in addition to the fetching and disposition of any of the medium modules 20 of the board body 10, the board body 10 is also provided for the identification, positioning, etc. of any of the medium modules 20. Therefore, the test environments in which the medium modules 20 are located are consistent, and any one of the medium modules 20 can be operated separately. The medium module 20 in the board body 10 can be conveniently retrieved in form of an array arrangement.

It is to be noted that the medium module 20 is in a one-to-one correspondence with the camera module 30 during the test. In addition to the different positions of the medium modules 20 in the board body 10, the board body 10 can ensure that each of the medium modules 20 is at the same height or in the same time level. That is, the camera module 30 can be operated in batches by the medium module 20 and the board body 10. In particular, for the testing operation of the camera module 30 in batches, the medium module 20 and the board body 10 can ensure the consistency and effectiveness of testing of each of the camera modules 30. Moreover, the direct operation of the medium module 20 does not adversely affect the camera module 30. The camera module 30 can be tested more efficiently by an indirect operation of the corresponding medium module 20 of the board body 10. Preferably, for a mechanized or automated test line, both the medium module 20 and the board body 10 can free productivity and reduce production costs.

In particular, a corresponding positioning structure is formed between the board bodies 10 of the testing jointed board, between the board body 10 and the medium module 20, and between the medium module 20 and the camera module 30 to ensure the test flow and the search for the board body 10, the medium module 20 and the camera module 30 during the process. Preferably, the medium module 20 can be consistent in height with each of the camera modules 30, and each of the medium modules 20 is consistent in height with the board body 10, so that each of the camera modules 30 has the same height during the test. Preferably, the position of each camera module 30 relative to the medium module 20 is determined, and the position of the medium module 20 relative to the board body 10 is determined, so that the position of the camera module 30 relative to the position in the test thereof is determined.

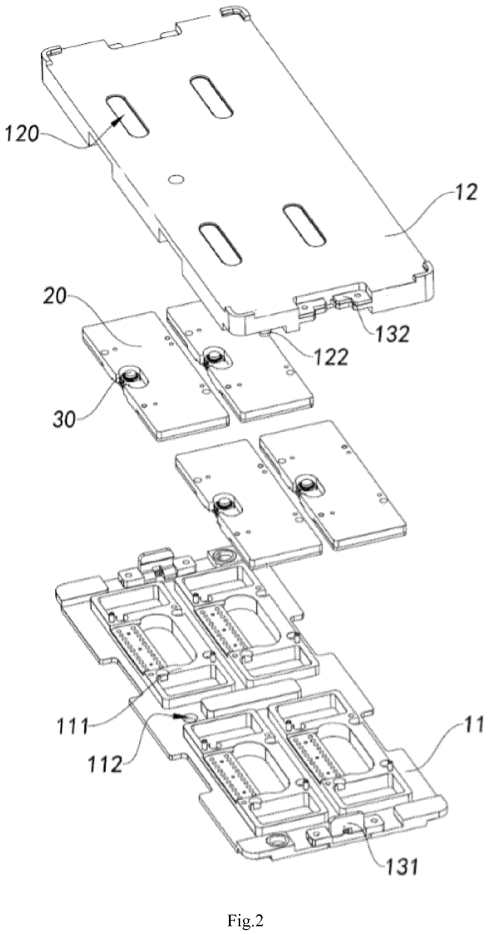

Specifically, as shown in Fig. 2, the board body 10 of the testing jointed board further includes a supporting board 11, wherein the supporting board 11 is disposed on the medium module 20, so that the medium module 20 can be fixed in the board body 10 in a certain arrangement and operated through the board body 10. The supporting board 11 of the board body 10 is detachably connected to the medium module 20, so that the medium module 20 placed in the board body 10 can be in a consistent test environment. Preferably, each of the medium modules 20 is detachably connected to the supporting board 11, so that the medium module 20 is disposed or taken out as needed. The medium module 20 is preferably snapped to the supporting board. The medium module 20 is preferably adapted to be adhesively connected to the supporting board in a host-and-slave manner. The medium module 20 is preferably adapted to be magnetically attracted to the supporting board. The medium module 20 is preferably adapted to be connected to the supporting board by a post and an aperture. The board body 10 further includes a cover 12 and a snapping assembly 13, wherein the cover 12 detachably covers the supporting board 11 to protect the medium module 20 disposed on the supporting board 11, wherein the snapping assembly 13 is disposed on the supporting board 11 and the cover 12 to detachably connect the cover 12 to the supporting board 11. It is obvious that when the medium module 20 is disposed on the supporting board 11 and the snapping assembly 13 fixes the cover 12 to the supporting board 11, the medium module 20 cannot be fetched from the board body 10. Correspondingly, when the medium module 20 needs to be taken out from the board body 10, the snapping assembly 13 is opened, so that the cover 12 can be detached from the supporting board 11, so that the medium module 20 can be taken out.

Here, those skilled in the art can understand that the board body 10 according to the embodiment of the present invention may not include the above-mentioned cover 12. For example, in the case where the medium module 20 is directly fixed to the supporting board 11, the board body 10 according to an embodiment of the present invention may include only a single supporting board 11.

Moreover, although in the above embodiment, the usage of the board body 10 in combination with the medium module 20 of the embodiment of the present invention is taken as an embodiment, those skilled in the art can understand that a testing board in which the board body 10 is combined with the medium module 20 of the embodiment of the present invention can also be used separately. For example, the testing board can be directly connected to the camera module 30 without the medium module 20. In this way, by connecting a plurality of camera modules 30 on the testing board according to the embodiment of the present invention, the optical performance testing of the camera module 30 in batches can also be achieved, thereby achieving an effect of improving test efficiency. Alternatively, the testing board is fabricated by integrally forming the medium module 20 and the board body 10. Then, the camera module 30 is adapted to be directly connected to the testing board for testing.

Therefore, according to an aspect of an embodiment of the present invention, there is provided a testing board for testing optical performance of a camera module, the testing board including a board main body, and at least two accommodating positions disposed on the board main body, the accommodating position is for accommodating a testing unit, and the testing unit includes at least assembled camera module.

Preferably, the testing unit comprises both an assembled camera module and a medium module connected to the camera module.

In addition, the testing board according to the embodiment of the present invention can selectively connect different camera modules according to actual needs, that is, the embodiment of the present invention does not limit that at least two accommodating positions on the board main body are the accommodating positions of same size, and may also be accommodating positions of different sizes. Even if necessary, the accommodating position of the testing board can be used to accommodate the camera module and the medium module connected to the camera module respectively.

That is, the testing board according to the embodiment of the present invention can accommodate only the assembled camera module, only the medium module connected to the camera module, or both the camera module and the medium module. With the testing board, the camera module 30 can avoid repeated mounting and fetching during all tests, including the flow process, to reduce the adverse effects of the test on the camera module 30, reduce the time required for each of the camera modules 30 to be tested, and improve the overall efficiency of the test.

Preferably, the testing board according to an embodiment of the present invention further includes a fixing component for fixing the testing unit in the accommodating position. For example, the fixing component may be the above-described component for snapping the medium module to the supporting board, or a component for adhesively connecting the medium module to the supporting board in host-and-slave manner, or a component for magnetically attracting the medium module to the supporting board. In addition, for the above-mentioned cover 12 and the snapping assembly 13, on one hand, they acts as a fixing component for fixing the testing unit in the accommodating position, and on the other hand, plays the role of protecting the testing unit accommodated in the accommodating position.

That is, the testing board according to an embodiment of the present invention further includes a protection component for protecting the testing unit accommodated in the accommodating position.

In the testing board according to an embodiment of the present invention, the fixing component and the protection component are preferable, but are not essential. Specifically, in the test of the optical performance of the camera module, in most cases the testing board remains horizontally placed, and the testing board also moves horizontally along with the camera module during the test. Therefore, if the specific test conditions determine that the camera module does not cause sufficient displacement in the accommodating position of the testing board, the fixed components are not necessarily required.

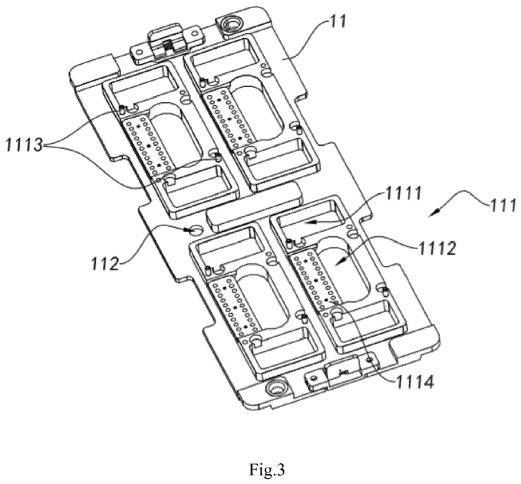

It should be noted that the testing board and the testing jointed board composed of the board body 10 and the medium module 20 are similar in function to the camera module 30. Here, the testing jointed board is mainly explained in detail. As shown in Fig. 3 to Fig. 5, in the preferred embodiment, the medium module 20 is disposed in a 2×2 array form on the supporting board 11 of the board body 10 of the testing jointed board. Each of the medium modules 20 is disposed at a certain determined position. The supporting board 11 provides at least one testing position 111, wherein the testing position 111 is correspondingly disposed the medium module 20, so that the camera module 30 carried by the medium module 20 is placed in the determined position. The supporting board 11 of the testing jointed board in the preferred embodiment has four testing positions 111, which can be placed with four medium modules 20, respectively. The testing position 111 further includes a testing interface portion 1111, a recognizing portion 1112, a positioning portion 1113, and a placement portion 1114. It is to be noted that the structure of the testing position 111 corresponds to the structure of the medium module 20. That is, in the preferred embodiment, the testing interface portion 1111 is an interface through hole provided to the medium module 20, and the recognizing portion 1112 is a through hole for recognizing identity of the camera module 30 carried by the medium module 20. The positioning portion 1113 is a positioning structure relative to the medium module 20, and the placement portion 1114 is a placement position of the camera module 30 corresponding to the medium module 20. It is to be noted that the structure of each testing position 111 is consistent, which facilitates the adaptive placement of the medium module 20. More specifically, the testing interface portion 1111 is two symmetric through holes in the preferred embodiment, and the testing interface portion 1111 allows the interface of the test equipment to be connected to the medium module 20. Of course, according to the design of the medium module 20, the position and shape of the testing interface portion 1111 need to be adjusted accordingly. The recognizing portion 1112 is a position identified corresponding to the camera module 30 that is carried. In the preferred embodiment, the recognizing portion 1112 is a through hole that can recognize the identity of the camera module 30. Through the recognizing portion 1112, the identity of the camera module 30 can be recognized. Of course, the shape and form of the recognizing portion 1112 can be adjusted according to the identification manner of the camera module 30. For example, when it is necessary to recognize the identity by scanning the identification code, the recognizing portion 1112 is a through hole for passing light, and when it is necessary to identify the RFID information, the recognizing portion 1112 is a corresponding position that can be recognized.

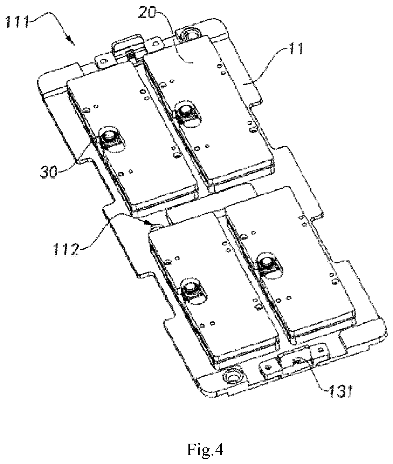

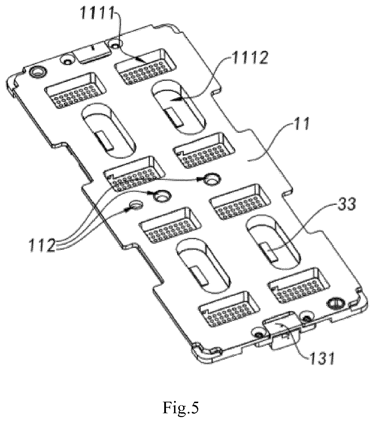

The positioning portion 1113 is a structure that is mutually positioned with the medium module 20, so that the position of the testing interface portion 1111 and the recognizing portion 1112 relative to the supporting board 11 is determined. The position of each of the positioning portions 1113 and the medium module 20 is mutually determined, that is, it can be ensured that the position of all the medium modules 20 relative to the supporting board 11 is determined. This facilitates increase in efficiency of testing operation of the medium module 20. Preferably, in the preferred embodiment, the medium module 20 is square, and the positioning portion 1113 is a positioning post in a diagonal direction relative to the medium module 20. In other possible preferred embodiments, the positioning portion 1113 may specifically be a magnetic sheet, a snap pile or the like. The placement portion 1114 is a flexible sheet that is fixed to the testing position 111, and provides a height replenishment and buffer for the camera module 30 of the medium module 20. Of course, the design of the placement portion 1114 can also be adjusted according to the design of the medium module 20. Specifically, as shown in Fig. 4 and Fig. 5, the design of the testing portion 111 corresponds to the design of the medium module 20, and the specific structure of each of the testing portions 111 is mainly for satisfying the stability and power supplying conditions of the medium module 20.

It is to be noted that, in the preferred embodiment, the supporting board 11 of the testing jointed board has at least one calibrating position 112, and the calibrating position 112 is located at a central axis of the supporting board 11. The calibrating position 112 provides a calibration of the position of the supporting board 11, that is, the specific position of the supporting board 11 can be determined based on the calibrating position 112. In addition, the cover 12 also has a calibrating position 122 corresponding to the supporting board 11, that is, the overall position of the board body 10 can be determined by the mutual calibration of the calibrating position 112 of the supporting board 11 and the calibrating position 122 of the cover 12. In addition, the cover 12 is further provided with at least one light passing opening 120 to provide a light passing condition for testing of the camera module 30. It can be understood by those skilled in the art that the light passing opening 120 may be in one-to-one correspondence with the camera module 30, or may be a one-to-many opening configuration, and does not affect the technical scope of the present invention.

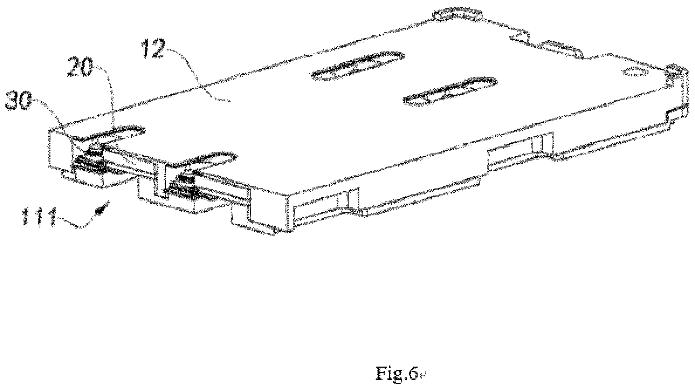

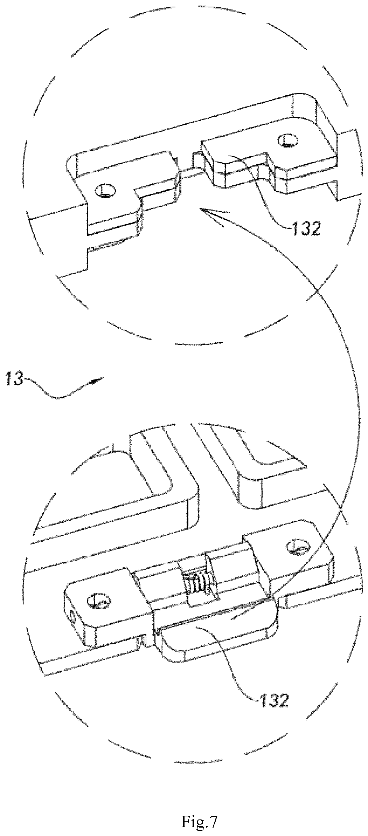

The specific case in which the medium module 20 of the preferred embodiment is disposed on the board body 10 is as shown in Fig. 6. The medium module 20 is disposed on the supporting board 11 of the board body 10, and the cover 12 covers and fixes the medium module 20 to the support board 11. As shown in Fig. 7, the snapping assembly 13 snaps and fixes the cover 12 and the supporting board 11 to fix the position of each of the medium modules 20. During the testing process and the flow, the board body 10 can stably fix each of the medium modules 20, and the camera module 30 carried by each of the medium modules 20 is placed in the same test environment. It is to be noted that, for each of the board body 10 used in the test, the positions of the medium modules 20 between the board bodies 10 are relatively determined. The camera module 30 of the medium module 20 can find the medium module 20 of the board body 10 by finding the board body 10.

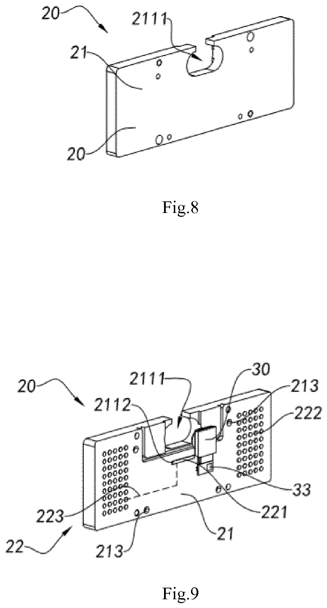

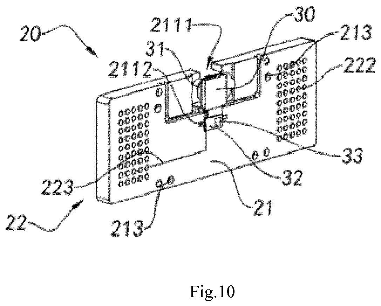

The medium module 20 in the preferred embodiment is shown in Fig. 8 to Fig. 10. The medium module 20 further includes a substrate 21 and an expansion circuit 22, the expansion circuit 22 being embedded in the substrate 21, and the substrate 21 is preferably integrally formed. The medium module 20 is adapted to be connected to the camera module 30. The camera module 30 is connected to the test equipment by the medium module 20 and is protected by the medium module 20. The operation of the camera module 30 during the testing process and the flow is completed by the medium module 20. For convenience of explanation, the further structure of the camera module 30 is illustrated here, mainly including a lens 31, a plug 32 and a mark 33.

The mark 33 is an identifier for the camera module 30. Then, as shown in Fig. 9, the substrate 21 further includes a fixed position 211 adapted to connect and fix the camera module 30. More specifically, the fixed position 211 is provided with a lens groove 2111 for placing the lens 31 of the camera module 30. The fixed position 211 of the substrate 21 further includes a socket 2112, and the socket 2112 can be closely connected to the plug 32 of the camera module 30. The camera module 30 can be stably fixed to the substrate 21 through the connection of the lens groove 2111 and the socket 2112. Moreover, the fixed position 211 has adaptability, and can be placed with and connected to different types of camera modules 30. In the preferred embodiment, the camera module 30 is a single camera module, and the lens groove 2111 allows the lens 31 of the camera module 30 to be entirely placed in. The socket 2112 is also adapted to the plug 32 of the camera module 30. That is, in order to adapt to the camera module 30, the structure of the fixed position 211 is disposed correspondingly. However, the fixed position 211 not only connects the camera module 30 to the substrate 21 but also ensures that the camera module 30 is always operated by the medium module 20 during the testing process and the flow. More specifically, each of the medium modules 20 will correspond to the camera module 30 during the testing process and the flow, and the fixed position 211 can provide stability of the camera module 30 in structure and circuit connection. It is to be noted that, in the preferred embodiment, the socket 2112 of the fixed position 211 is in form of a connector, so that the camera module 30 is not easily dropped during operation. That is, the camera module 30 will maintain a stable connection relationship relative to the medium module 20 by the fixing of the fixed position 211.

More specifically, the expansion circuit 22 of the medium module 20 further includes a module interface 221, a testing interface 222, and a trace 223 connected to the module interface 221 and the testing interface 222. The module interface 221 and the testing interface 222 are correspondingly connected by the trace 223. Preferably, the module interface 221 and the testing interface 222 are connected to each other in a certain manner and corresponding relationship.

The module interface 221 is built in the socket 2112 of the fixed position 211, so that when the plug 32 of the camera module 30 is connected to the socket 2112, the circuit of the camera module 30 and the expansion circuits 22 are connected to each other. Further, the circuit of the camera module 30 is connected to the expansion circuit 22, so that the camera module 30 can be tested through the testing interface 222 of the expansion circuit 22. That is, after the camera module 30 is connected to the expansion circuit 22, the test of the camera module 30 can be performed through the testing interface 222 of the expansion circuit 22. The testing interface 222 provides the corresponding access port to the test equipment to perform the test on the camera module 30 carried by the medium module 20. In the preferred embodiment, the testing interface 222 is preferably disposed in form of an electrical contact on the surface of the substrate 21 for electrically connecting probes of the test equipment by contacting. More preferably, the testing interface 222 in the preferred embodiment adopts a distributed arrangement, so that the testing interface 222 can be more stably and accurately contacted. In this embodiment, the testing interface 222 is preferably symmetrically arranged on the surface of the substrate 21 in two parts. In other feasible modes, the testing interface 222 may be a one-piece layout, where the layout of the testing interface 222 of the present invention is not limited.

Further, the substrate 21 of the medium module 20 further includes at least one positioning member 213, and the positioning member 213 is disposed correspondingly to the positioning portion 1113 of the testing position 111 of the supporting board 11 of the board body 10. That is, the positioning member 213 of the medium module 20 is disposed correspondingly to the positioning portion 1113 of the board body 10, so that the relative position of the medium module 20 and the board body 10 is determined. In the preferred embodiment, the medium module 20 is square, and the positioning member 213 is a positioning hole in a diagonal direction relative to the medium module 20. In other possible preferred embodiments, the positioning member 213 may specifically be a magnetic sheet, a snap pile or the like. It should be noted that the positioning member 213 is disposed correspondingly to the positioning portion 1113, that is, the positioning member 213 and the positioning portion 1113 are paired. When the positioning member 213 is matched with the positioning portion 1113, the medium module 20 is mutually positioned with the testing position 111 of the board body 10. After each of the medium modules 20 in the board body 10 is mutually positioned with the positioning portion 1113 by the positioning member 213, the medium modules 20 are all positioned with the board body 10. It can be understood that, when the camera module 30 and the medium module 20 are fixed to each other, and the medium module 20 and the board body 10 are mutually positioned, the position of each camera module 30 in the board body 10 can also be determined. Further, because the board body 10 can be positioned by the mark 112, the relative position of the camera module 30 during the testing process can be determined. It can be understood that positioning information of the medium module 20 that the camera module 30 is at a position of which of the board body 10 is very important for the entire batch test.

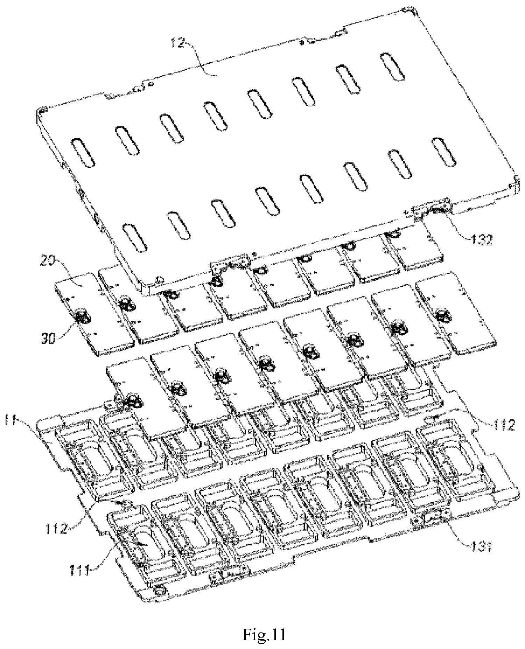

Another possible preferred embodiment of the invention is shown in Fig. 11 to Fig. 16. Similar to the above embodiment, the preferred embodiment also provides a board body 10 and a medium module 20, wherein the medium module 20 is connected to a camera module 30, wherein the camera module 30 is a finished product to be tested. The camera module 30 is connected to the medium module 20 for performance testing of the camera module 30.

In particular, the board body 10 provided by the preferred embodiment is disposed with sixteen medium modules 20 for testing up to sixteen camera modules 30 at the same time. Preferably, the board body 10 can be disposed with 2 × 8 of the medium modules 20 which are arranged in an array. The board body 10 fixes the medium module 20 in an array form, and ensures that the environment of the medium module 20 is consistent during the test. That is, the test conditions of all of the medium modules 20 disposed on the testing board are identical. In this way, the test environment of the camera module 30 carried by the medium module 20 can be ensured to be stable.

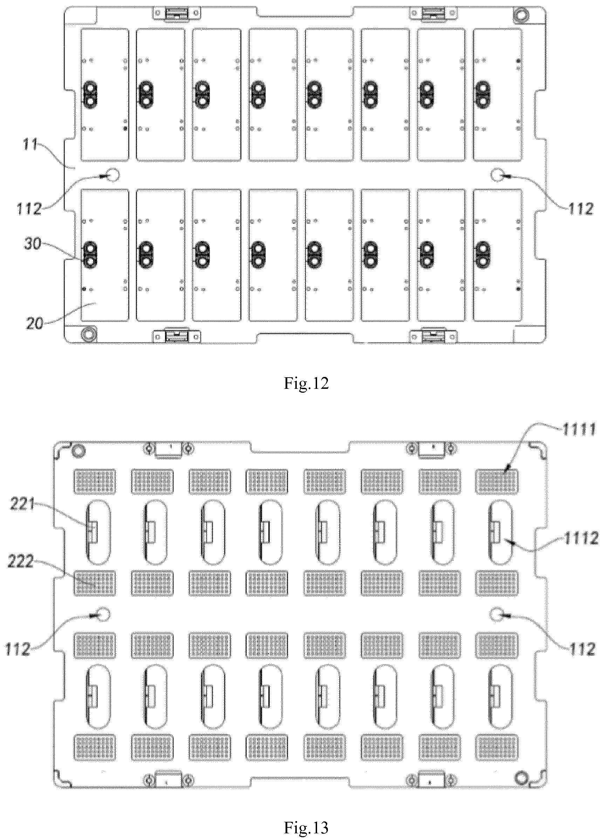

Specifically, as shown in Fig. 12 and Fig. 13, the board body 10 further includes a supporting board 11, wherein the supporting board 11 is disposed on the medium module 20, so that the medium module 20 can be fixed in the board body 10 in a certain arrangement and operated by the board body 10. The supporting board 11 of the board body 10 is detachably connected to the medium module 20, so that the medium module 20 placed in the board body 10 can be in a consistent test environment. The medium module 20 is preferably connected to the testing position 111 of the supporting board 11 by a post and an aperture. The board body 10 further includes a cover 12 and a snapping assembly 13, wherein the cover 12 detachably covers the supporting board 11 to protect the medium module disposed on the supporting board 11, wherein the snapping assembly 13 is disposed on the supporting board 11 and the cover 12 to detachably connect the cover 12 to the supporting board 11. It is obvious that when the medium module 20 needs to be taken out from the board body 10, the snapping assembly 13 is opened, so that the cover 12 can be fetched from the supporting board 11, thereby the medium module 20 can be taken out. Correspondingly, after the medium module 20 is disposed on the supporting board 11, the snapping assembly 13 fixes the cover 12 to the supporting board 11, the medium module 20 cannot be fetched from the board body 10. The medium modules 20 are disposed on the supporting board 11 of the board body 10 in a 2 × 8 array form. Each of the medium modules 20 is disposed at a certain determined position. The supporting board 11 provides at least one testing position 111, wherein the testing position 111 is correspondingly disposed on the medium module 20, and the camera module 30 carried by the medium module 20 is placed in a determined position. In the preferred embodiment, the supporting board 11 has sixteen testing positions 111, which can correspondingly be placed with sixteen medium modules 20. The testing position 111 further includes a testing interface portion 1111, a recognizing portion 1112, a positioning portion 1113, and a placement portion 1114. It is to be noted that the structure of the testing position 111 corresponds to the structure of the medium module 20. That is, in the preferred embodiment, the interface 1111 is an interface through hole provided to the medium module 20, and the recognizing portion 1112 is a through hole for recognizing identity of the camera module 30 carried by the medium module 20. The positioning portion 1113 is a positioning structure relative to the medium module 20, and the placement portion 1114 is a placement position corresponding to the camera module 30 of the medium module 20. It is to be noted that the structure of each testing position 111 is consistent, which facilitates the adaptive placement of the medium module 20. The position of each of the positioning portions 1113 and the medium module 20 is mutually determined, that is, the position of all of the medium modules 20 relative to the supporting board 11 can be determined. This facilitates increasing the efficiency of the testing operation of the medium module 20. Preferably, in the preferred embodiment, the medium module 20 is square, and the positioning portion 1113 is a positioning hole in a diagonal direction relative to the medium module 20. In general, the design of the testing portion 111 corresponds to the design of the medium module 20, and the specific structure of each of the testing portions 111 is mainly to satisfy the stability and power supplying conditions of the medium module 20.

It is to be noted that in the preferred embodiment, the supporting board 11 has at least one calibrating position 112, and the calibrating position 112 is located at the central axis of the supporting board 11. The calibrating position 112 provides a calibration of the position of the supporting board 11, that is, the specific position of the supporting board 11 can be determined based on the calibrating position 112. Different from the above preferred embodiment, the calibrating position 112 is present separately on the supporting board 11 and does not have correspondence on the cover 12. That is, in the preferred embodiment, the entire board body 10 is only calibrated by the calibrating position 112 of the supporting board 11. In addition, the cover 12 further provides at least one light passing opening 120 to provide a light-passing condition for testing of the camera module 30. The light passing port 120 can be applied to all types of the camera modules. Only the supporting board 11 needs to be calibrated to determine the position of the board body 10. The configuration of the light-passing opening 120 of the cover 12 does not affect the test conditions, nor does it require a separate calibration.

It is to be noted that the medium module 20 has a one-to-one correspondence with the camera module 30 during the testing process. In addition to the different positions of the medium modules 20 in the board body 10, the board body 10 can ensure that each of the medium modules 20 is at the same height or in the same time level. That is, the camera module 30 can be operated in batches by the medium module 20 and the board body 10. In particular, for the testing operation of the camera module 30 in batches, the medium module 20 and the board body 10 can ensure the consistency and effectiveness of testing of each of the camera modules 30. Moreover, the direct operation of the medium module 20 does not adversely affect the camera module 30.

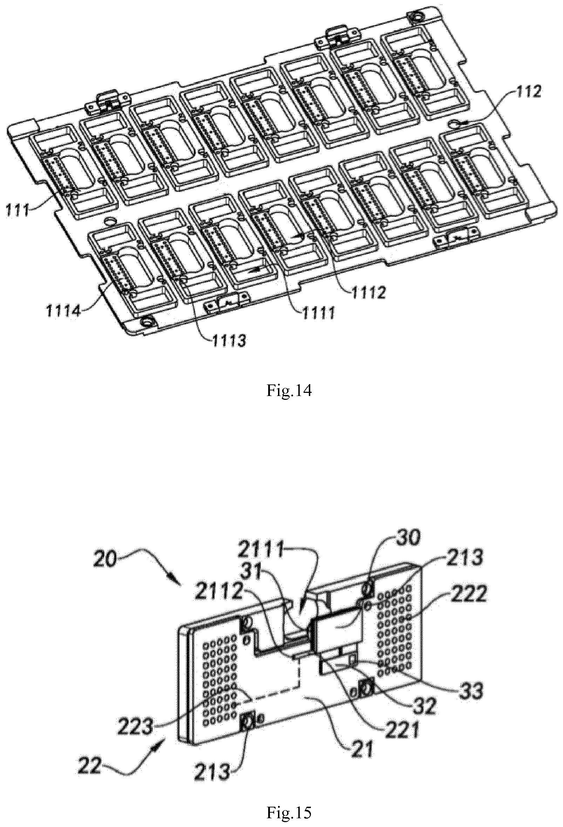

The camera module 30 can be tested more efficiently by the indirect operation of the corresponding medium module 20 of the board body 10. The medium module 20 is disposed on the supporting board 11 of the board body 10, and the cover 12 covers and fixes the medium module 20 to the support board 11. As shown in Fig. 14, the snapping assembly 13 snaps and secures the cover 12 and the supporting board 11 to fix the position of each of the medium modules 20. During the testing process and the flow, the board body 10 can stably fix each of the medium modules 20, and the camera module 30 carried by each of the medium modules 20 is in the same test environment. It is to be noted that, for each of the board body 10 used in the test, the positions of the medium modules 20 between the board bodies 10 are relatively determined. The camera module 30 of the medium module 20 can correspond to the medium module 20 of the board body 10 by corresponding to the board body 10.

The medium module 20 in the preferred embodiment is as shown in Fig. 15. It should be noted that the medium module 20 is functionally similar to the aforementioned preferred embodiment.

That is, the medium module 20 further includes a substrate 21 and an expansion circuit 22, which are separately disposed on a circuit board, and the substrate 21 is a cover plate of a circuit board of the expansion circuit 22. Preferably, the circuit board of the expansion circuit 22 is made of PCB material. The medium module 20 is adapted to be connected to the camera module 30. The camera module 30 is connected to the test equipment by the medium module 20 and is protected by the medium module 20. The operation of the camera module 30 during the testing process and the flow is completed through the medium module 20. For convenience of description, the structure of the camera module 30 is further illustrated here as a lens 31, a plug 32 and an identifier 33, wherein the identifier 33 is an identity of the camera module 30.

The substrate 21 further includes a fixed position 211 adapted to connect and fix the camera module 30. More specifically, the fixed position 211 is provided with a lens groove 2111 for placing the lens 31 of the camera module 30. The circuit board of the expansion circuit 222 further includes a socket 2112, and the socket 2112 can be closely connected to the plug 32 of the camera module 30. The expansion circuit 22 of the medium module 20 further includes a module interface 221, a testing interface 222, and a trace 223 connected to the module interface 221 and the testing interface 222. The module interface 221 and the testing interface 222 are correspondingly connected by the trace 223. Preferably, the module interface 221 and the testing interface 222 are connected to each other in a certain manner and corresponding relationship.

The module interface 221 is built in the socket 2112, so that when the plug 32 of the camera module 30 is connected to the socket 2112, the circuit of the camera module 30 and the expansion circuit 22 are connected to each other. Further, the circuit of the camera module 30 is connected to the expansion circuit 22, so that the camera module 30 can be tested through the testing interface 222 of the expansion circuit 22. That is, after the camera module 30 is connected to the expansion circuit 22, the test of the camera module 30 can be performed through the testing interface 222 of the expansion circuit 22. The camera module 30 can be stably fixed to the medium module 20 by the connection of the lens groove 2111 and the socket 2112. Moreover, the lens groove 2111 has an adaptability, and can be placed on and connected to different types of the camera module 30. In the preferred embodiment, the camera module 30 is a dual camera module, and the lens groove 2111 allows the lens 31 of the camera module 30 to be entirely placed in. The socket 2112 is also adapted to the plug 32 of the camera module 30. However, the medium module 20 not only connects the camera module 30 to the substrate 21 and the expansion circuit 22, but also ensures that the camera module 30 is always operated through the medium module 20 during the testing process and the flow. More specifically, each of the medium modules 20 will correspond to the camera module 30 in the test process and the flow. It is to be noted that, in the preferred embodiment, the socket 2112 of the fixed position 211 is adopted a form of a connector, so that the camera module 30 is not easily dropped during operation. That is, the camera module 30 maintains a stable connection relationship relative to the medium module 20 by the fixing of the substrate 21 and the expansion circuit 22. It should be noted that the testing interface 222 is disposed on the surface of the substrate 21 in a form of electrical contacts for probes of the test equipment to be electrically connected by contacting.

More preferably, the testing interface 222 in the preferred embodiment adopts a symmetric distributed arrangement, and a certain gap is maintained between each electrical contact, so that the testing interface 222 can be more stably and accurately contacted.

Different from the foregoing embodiment, the circuit board of the expansion circuit 22 of the medium module 20 further includes at least one positioning member 213, and the positioning member 213 is disposed corresponding to the positioning portion 1113 of the testing position 111 of the supporting board 11 of the board body 10. That is, the positioning member 213 of the medium module 20 and the positioning portion 1113 of the board body 10 are disposed corresponding to each other, so that the relative position of the medium module 20 and the board body 10 is determined. In the preferred embodiment, the medium module 20 is square, and the positioning member 213 is a positioning post in a diagonal direction relative to the medium module 20. It is to be noted that the positioning member 213 and the positioning portion 1113 are disposed corresponding to each other, that is, the positioning member 213 and the positioning portion 1113 are paired. When the positioning member 213 of the circuit board of the expansion circuit 22 and the positioning portion 1113 are matched corresponding to each other, the medium module 20 and the testing position 111 of the board body 10 mutually determine the position.

After each of the medium modules 20 in the board body 10 and the positioning portion 1113 are mutually positioned by the positioning member 213, the medium modules 20 are all positioned with the board body 10. It can be understood that, when the camera module 30 and the medium module 20 are fixed to each other, and the medium module 20 and the board body 10 are mutually positioned, the position of each camera module 30 in the board body 10 can also be determined. The position of the camera module 30 can be more accurately ensured by the positioning of the positioning member 213 of the circuit board of the expansion circuit 22.

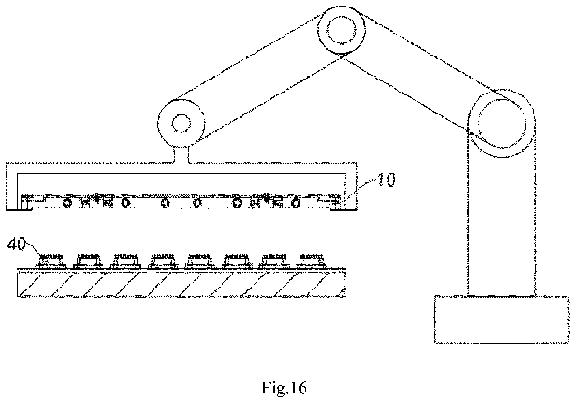

Further, a test equipment for applying the board body 10 and the medium module 20 is as shown in Fig. 16. The test equipment has a testing circuit 40 that is adapted to the board body 10. The test equipment is connected to the medium module 20 of the board body 10 through the testing circuit 40, so that a plurality of the medium modules 20 disposed in the board body 10 are simultaneously connected to the test equipment, and the camera module 30 carried by the module 20 is simultaneously tested. In addition, the connection between the medium module 20 and the camera module 30 is one by one. That is, the camera module 30 can complete all testing operations through the medium module 20 without having to be repeatedly connected and fetched relative to the medium module 20. For example, the camera module 30 to be tested is connected and fixed to the medium module 20 before starting the testing operation. The medium module 20 will carry the camera module 30 for all tests. The medium module 20 will always connect to the camera module 30 regardless of whether the camera module 30 passes the test.

That is, the medium module 20 can also assist the camera module 30 in performing the corresponding operation for failing to pass the test for the camera module 30 that has not passed the test. For the camera module 30 that passes the test, the medium module 20 will also accompany the camera module 30 to complete other tests. Also, because the medium module 20 provides an adapted testing interface, the testing circuit 40 only requires a corresponding interface, and the medium module 20 can perform different performance test projects. Through the medium module 20, the camera module 30 can avoid repeated connection and fetching during all tests, including the flow process, to reduce the time required for each of the camera modules 30 to be tested, and improve the overall efficiency of the test, which is suitable for testing of the camera module 30 in batches.

Those skilled in the art should understand that the above description and the embodiments of the present invention shown in the accompanying drawings are only by way of view and not limitation. The scope of protection of the present application is defined by the appended claims.

## Claims

1. A testing jointed board for testing optical performance of a camera module (30), **characterized in that** it comprises:
a board body (10); and
at least two medium modules (20) disposed on the board body, wherein each medium module is adapted to be connected to a camera module (30) to perform test of the optical performance of the camera module through the board body;
wherein each of the medium modules (20) comprises:
a substrate (21) for connecting and detachably fixing the camera module; and
an expansion circuit (22) for electrically connecting to the camera module, which expansion circuit is disposed on the substrate and adapted to be connected to the camera module, to provide an adaptive circuit switching for the camera module to connect a test equipment;
wherein the board body (10) further comprises a supporting board (11), and each of the medium modules is detachably connected to the supporting board.

2. The testing jointed board according to claim 1, wherein the testing jointed board is disposed with m × n of the medium modules (20) which are arranged in an array, wherein m and n are integers greater than or equal to 2.

3. The testing jointed board according to claim 2, wherein the supporting board (11) is adapted to dispose the medium modules (20), so that the medium modules are fixed on the board body in a certain arrangement and operated through the testing jointed board.

4. The testing jointed board according to claim 3, wherein the board body further comprises a cover (12) and a snapping assembly (13), and the cover detachably covers the supporting board (11) to protect the medium module (20) disposed on the supporting board, and the snapping assembly is disposed on the supporting board and the cover to detachably connect the cover to the supporting board.

5. The testing jointed board according to claim 3, wherein the supporting board provides at least four testing positions (111) to be correspondingly disposed with the medium module (20), so that the camera module (30) carried by the medium module is placed in the testing position.

6. The testing jointed board according to claim 5, wherein the testing position further includes a testing interface portion (1111), and the testing interface portion provides a through hole of electrical connection to the medium module (20).

7. The testing jointed board according to claim 5, wherein the testing position further includes a recognizing portion (1112), and the recognizing portion is a through hole for recognizing identity of the camera module (30) carried by the medium module (20).

8. The testing jointed board according to claim 5, wherein the testing position further includes a positioning portion (1113), and the positioning portion provides positioning relative to the medium module (20).

9. The testing jointed board according to claim 1, wherein the expansion circuit further comprises a module interface (221), a testing interface (222), and a trace (223) connected to the module interface and the testing interface.

10. The testing jointed board according to claim 9, wherein the testing interface (222) is disposed on the substrate in a form of electrical contacts for electrically connecting probes of a test equipment by contacting.

11. The testing jointed board according to claim 9, wherein the substrate further comprises a fixed position (211) adapted to connect and detachably fix the camera module (30).

12. The testing jointed board according to claim 11, wherein the fixed position (211) is provided with a lens groove (2111) for placing a lens (31) of the camera module (30).

13. The testing jointed board according to claim 11, wherein the expansion circuit (22) is embedded in the substrate (21) and the substrate is integrally formed.

14. The testing jointed board according to claim 11, wherein the expansion circuit (22) is formed as a circuit board independent of the substrate (21) and the substrate closely covers the circuit board.

15. The testing jointed board according to claim 12, wherein the substrate (21) further comprises a socket (2112) closely connected to the camera module (30).

16. The testing jointed board according to claim 15, wherein the camera module (3) is stably fixed to the medium module (20) by the connection of the lens groove (2111) and the socket (2112).

17. The testing jointed board according to claim 16, wherein the fixed position (211) is adaptable by the connection of the lens groove (2111) and the socket (2112).

18. The testing jointed board according to claim 16, wherein the module interface (221) is built in the socket (2112), so that when the camera module (30) is connected to the socket, the camera module and the expansion circuit (22) are electrically connected.

19. A test equipment for testing at least four camera modules (30) using the testing jointed board of claim 5.

## Patentansprüche

1. Zusammengefügte Testplatine zum Testen der optischen Leistung eines Kameramoduls (30), **dadurch gekennzeichnet, dass** sie umfasst:
einen Platinenkörper (10);
mindestens zwei auf dem Platinenkörper angeordnete Medienmodule (20), wobei jedes Medienmodul dazu geeignet ist, an einem Kameramodul (30) angeschlossen zu werden, um einen Test der optischen Leistung des Kameramoduls durch den Platinenkörper durchzuführen;
wobei jedes der Medienmodule (20) umfasst:
ein Substrat (21) zum Anschließen und lösbaren Befestigen des Kameramoduls; und
eine Erweiterungsschaltung (22) zum elektrischen Anschließen an das Kameramodul, wobei die Erweiterungsschaltung auf dem Substrat angeordnet und für den Anschluss an das Kameramodul geeignet ist, um eine adaptive Schaltungsumschaltung für das Kameramodul zum Anschließen eines Testgeräts bereitzustellen;
wobei der Platinenkörper (10) ferner eine Stützplatte (11) umfasst, und jedes der Medienmodule lösbar an der Stützplatte angeschlossen ist.

2. Zusammengefügte Testplatine nach Anspruch 1, wobei die zusammengefügte Testplatine mit m × n der Mediummodule (20) versehen ist, die in einem Array angeordnet sind, wobei m und n ganze Zahlen größer als oder gleich 2 sind.

3. Zusammengefügte Testplatine nach Anspruch 2, wobei die Stützplatte (11) zum Anordnen der Medienmodule (20) ausgelegt ist, so dass die Medienmodule in einer bestimmten Anordnung am Platinenkörper befestigt und über die zusammengefügte Testplatine betätigt sind.

4. Zusammengefügte Testplatine nach Anspruch 3, wobei der Platinenkörper ferner eine Abdeckung (12) und eine Schnappbaugruppe (13) umfasst, und wobei die Abdeckung die Stützplatte (11) lösbar abdeckt, um das auf der Stützplatte angeordnete Medienmodul (20) zu schützen, und wobei die Schnappbaugruppe auf der Stützplatte und der Abdeckung angeordnet ist, um die Abdeckung lösbar mit der Stützplatte zu verbinden.

5. Zusammengefügte Testplatine nach Anspruch 3, wobei die Stützplatte mindestens vier Testpositionen (111) bereitstellt, die jeweils mit dem Medienmodul (20) auszustatten sein, so dass das vom Medienmodul getragene Kameramodul (30) in der Testposition gelegt ist.

6. Zusammengefügte Testplatine nach Anspruch 5, wobei die Testposition ferner einen Testschnittstellenabschnitt (1111) umfasst, und der Testschnittstellenabschnitt ein Durchgangsloch für die elektrische Verbindung zum Medienmodul (20) bereitstellt.

7. Zusammengefügte Testplatine nach Anspruch 5, wobei die Testposition ferner einen Erkennungsabschnitt (1112) umfasst, und der Erkennungsabschnitt ein Durchgangsloch zum Erkennen der Identität des vom Medienmodul (20) getragenen Kameramoduls (30) ist.

8. Zusammengefügte Testplatine nach Anspruch 5, wobei die Testposition ferner einen Positionierungsabschnitt (1113) umfasst, und der Positionierungsabschnitt eine Positionierung relativ zum Medienmodul (20) bereitstellt.

9. Zusammengefügte Testplatine nach Anspruch 1, wobei die Erweiterungsschaltung ferner eine Modulschnittstelle (221), eine Testschnittstelle (222) und eine Leiterbahn (223) umfasst, die mit der Modulschnittstelle und der Testschnittstelle verbunden ist.

10. Zusammengefügte Testplatine nach Anspruch 9, wobei die Testschnittstelle (222) auf dem Substrat in Form von elektrischen Kontakten zum elektrischen Verbinden von Sonden eines Testgeräts durch Kontaktieren angeordnet ist.

11. Zusammengefügte Testplatine nach Anspruch 9, wobei das Substrat ferner eine feste Position (211) umfasst, die zum Anschließen und lösbaren Befestigen des Kameramoduls (30) geeignet ist.

12. Zusammengefügte Testplatine nach Anspruch 11, wobei die feste Position (211) mit einer Linsennut (2111) zum Legen einer Linse (31) des Kameramoduls (30) versehen ist.

13. Zusammengefügte Testplatine nach Anspruch 11, wobei die Erweiterungsschaltung (22) in das Substrat (21) eingebettet ist und das Substrat einstückig ausgebildet ist.

14. Zusammengefügte Testplatine nach Anspruch 11, wobei die Erweiterungsschaltung (22) als vom Substrat (21) unabhängige Leiterplatte ausgebildet ist und das Substrat die Leiterplatte eng abdeckt.

15. Zusammengefügte Testplatine nach Anspruch 12, wobei das Substrat (21) ferner eine Buchse (2112) aufweist, die eng mit dem Kameramodul (30) verbunden ist.

16. Zusammengefügte Testplatine nach Anspruch 15, wobei das Kameramodul (3) durch die Verbindung der Linsennut (2111) und der Buchse (2112) stabil am Medienmodul (20) befestigt ist.

17. Zusammengefügte Testplatine nach Anspruch 16, wobei die feste Position (211) durch die Verbindung der Linsennut (2111) und der Buchse (2112) anpassbar ist.

18. Zusammengefügte Testplatine nach Anspruch 16, wobei die Modulschnittstelle (221) in die Buchse (2112) eingebaut ist, so dass das Kameramodul und die Erweiterungsschaltung (22) elektrisch verbunden sind, wenn das Kameramodul (30) mit der Buchse verbunden ist.

19. Testgerät zum Testen von mindestens vier Kameramodulen (30) unter Verwendung der zusammengefügten Testplatine nach Anspruch 5.

## Revendications

1. Une carte articuléee de test pour tester le performance optique d'un module de caméra (30), **caractérisée en ce qu'**elle comprend :
un corps de carte (10) ; et
au moins deux modules de milieu (20) disposés sur le corps de planche, chaque module de support étant adapté pour être connecté à un module de caméra (30) pour effectuer un test de performance optique du module de caméra à travers le corps de carte;
dans lequel chacun des modules de milieu (20) comprend :
un substrat (21) pour connecter et fixer de manière amovible le module de caméra; et
un circuit d'extension (22) pour se connecter électriquement au module de caméra, le circuit d'extension est disposé sur le substrat et adapté pour être connecté au module de caméra, pour fournir une commutation de circuit adaptative pour que le module de caméra connecte un équipement de test;
dans lequel le corps de carte (10) comprend en outre une carte de support (11), et chacun des modules de milieu est relié de manière amovible à la carte de support.

2. la carte articulée de test selon la revendication 1, dans lequel la carte articulée de test est disposé avec m × n des modules de milieu (20) qui sont agencés en un réseau, dans lequel m et n sont des nombres entiers supérieurs ou égaux à 2.

3. Le planche articulée de test selon la revendication 2, dans lequel la carte de support (11) est adapté pour disposer les modules de milieu (20), de sorte que les modules de milieu sont fixés sur le corps de carte dans un certain agencement et actionnés à travers la carte articulée de test.

4. la carte articuléee de test selon la revendication 3, dans lequel le corps de carte comprend en outre un couvercle (12) et un assemblage d'encliquetage (13), et le couvercle recouvre de manière amovible la carte de support (11) pour protéger le module de mileu (20) disposé sur la carte de support, et l'assemblage d'encliquetage est disposé sur la carte de support et le couvercle pour connecter de manière amovible le couvercle à la carte de support.

5. la carte articulée de test selon la revendication 3, dans laquelle la carte de support fournit au moins quatre positions de test (111) à disposer de manière correspondante avec le module de milieu (20), de sorte que le module de caméra (30) porté par le module de support est placé dans la position de test.

6. la carte articulée de test selon la revendication 5, dans laquelle la position de test comprend en outre une partie d'interface de test (1111), et la partie d'interface de test fournit un trou traversant de connexion électrique au module de milieu (20).

7. la carte articulée de test selon la revendication 5, dans laquelle la position de test comprend en outre une partie de reconnaissance (1112), et la partie de reconnaissance est un trou traversant pour reconnaître l'identité du module de caméra (30) porté par le module de milieu (20).

8. la carte articulée de test selon la revendication 5, dans lequel la position de test comprend en outre une partie de positionnement (1113), et la partie de positionnement fournit un positionnement par rapport au module de milieu (20).

9. la carte articulée de test selon la revendication 1, dans laquelle le circuit d'extension comprend en outre une interface de module (221), une interface de test (222) et une trace (223) connectée à l'interface de module et à l'interface de test.

10. la carte articulée de test selon la revendication 9, dans laquelle l'interface de test (222) est disposée sur le substrat sous la forme de contacts électriques pour connecter électriquement des sondes d'un équipement de test par contact.

11. la carte articulée de test selon la revendication 9, dans laquelle le substrat comprend en outre une position fixe (211) adaptée pour connecter et fixer de manière amovible le module de caméra (30).

12. la carte articulée de test selon la revendication 11, dans lequel la position fixe (211) est pourvue d'une rainure de lentille (2111) pour placer une lentille (31) du module de caméra (30).

13. la carte articulée de test selon la revendication 11, dans laquelle le circuit d'expansion (22) est intégré dans le substrat (21) et le substrat est formé d'un seul tenant.

14. la carte articulée de test selon la revendication 11, dans laquelle le circuit d'expansion (22) est formé comme une carte de circuit indépendante du substrat (21) et le substrat recouvre étroitement la carte de circuit.

15. la carte articulée de test selon la revendication 12, dans laquelle le substrat (21) comprend en outre une douille (2112) étroitement connectée au module de caméra (30).

16. la carte articulée de test selon la revendication 15, dans laquelle le module de caméra (3) est fixé de manière stable au module de milieu (20) par la connexion de la rainure de lentille (2111) et de la douille (2112).

17. la carte articulée de test selon la revendication 16, dans laquelle la position fixe (211) est adaptable par la connexion de la rainure de lentille (2111) et de la douille (2112).

18. la carte articulée de test selon la revendication 16, dans laquelle l'interface de module (221) est intégrée dans la douille (2112), de sorte que lorsque le module de caméra (30) est connecté à la douille, le module de caméra et le circuit d'extension (22) sont connectés électriquement.

19. Un équipement de test pour tester au moins quatre modules de caméra (30) en utilisant la carte articuléee de test selon la revendication 5.
